# EUROPÄISCHE PATENTANMELDUNG

(11) **EP 4 552 925 A1**
(43) Veröffentlichungstag der Anmeldung: **14.05.2025**
(21) Anmeldenummer: 24190657.7
(22) Anmeldetag: 24.07.2024
(51) Int. Cl.: B60Q 1/00, F21S 43/14, F21S 43/20, F21S 43/27, F21S 43/33, B60Q 1/26

(54) **SIGNALLEUCHTE FÜR FAHRZEUGE**

(30) Priorität: 10.11.2023 DE 202023106606 U
(71) Anmelder: ASPÖCK Systems GmbH, 4722 Peuerbach (AT)
(72) Erfinder: STRUBREITER, Daniel, 4723 Natternbach (AT)
(74) Vertreter: Söllner, Udo

(57) **Zusammenfassung**

Es ist eine Signalleuchte (1) für Fahrzeuge vorgesehen, mit einem Gehäuse (2) mit einer Hochachsrichtung (91), einer Außenlichtscheibe (11), einer Platine (41) mit Leuchtelementen (42, 43, 44, 45, 46) und mit einer optischen Struktureinrichtung (21), wobei die optische Struktureinrichtung (21) mindestens eine Verteilscheibe (22) und ein mechanisches Strukturelement (29) aufweist, wobei das mechanische Strukturelement (29) mit der mindestens einen Verteilscheibe (22) einstückig ausgeführt ist.

## Beschreibung

Die vorliegende Erfindung betrifft eine Signalleuchte für Fahrzeuge, mit einem Gehäuse, einer Platine mit einer Anzahl von Leuchtelementen, einer Außenlichtscheibe und einem Strukturelement nach dem Oberbegriff des Anspruchs 1.

Gattungsgemäße Signalleuchten werden häufig am Heckbereich von gezogenen Fahrzeugen angeordnet, bei denen es sich beispielsweise um Anhänger oder Sattelauflieger von Lastkraftwagen handeln kann, wobei dies lediglich beispielshalber gilt und nicht abschließend ist. Die nachfolgend näher erläuterte erfindungsgemäße Signalleuchte ist zum Einsatz sowohl an gezogenen Fahrzeugen als auch an Kraftfahrzeugen ganz allgemein vorgesehen.

Derartige Signalleuchten erfüllen mehrere lichttechnische Funktionen, beispielsweise als Schlusslicht und/oder Bremslicht und/oder Blinklicht und/oder Rückfahrscheinwerfer und/oder Nebelrücklicht. Zudem ist es bei manchen Fahrzeugen notwendig, Seitenmarkierungs- beziehungsweise Seitenbegrenzungsleuchten vorzusehen. Von den genannten Lichtfunktionen ist die des Schlusslichts diejenige, die hinsichtlich der Zeit, während der die Lichtfunktion zum Einsatz kommt, von dominanter Bedeutung ist.

Eine solche Signalleuchte, die ein Lichtleitelement aufweist, ist beispielsweise anhand der Offenlegungsschrift DE 10 2012 108 553 A1 bekannt geworden.

Eine Aufgabe der vorliegenden Erfindung besteht darin, eine Signalleuchte bereitzustellen, die die bisherigen Signalleuchten verbessert und insbesondere einfach zusammenzubauen ist sowie eine stabile mechanische Struktur aufweist.

Die zur Lösung dieser Aufgabe geschaffene Signalleuchte weist die im Anspruch 1 angegebenen Merkmale auf. Vorteilhafte Ausgestaltungen davon sind in den weiteren Ansprüchen beschrieben.

Eine solche Signalleuchte für Fahrzeuge ist mit einem Gehäuse, einer Außenlichtscheibe, einer Platine mit Leuchtelementen und mit einer optischen Struktureinrichtung versehen, wobei die optische Struktureinrichtung mindestens eine Verteilscheibe und ein mechanisches Strukturelement aufweist, und wobei das mechanische Strukturelement mit der mindestens einen Verteilscheibe einstückig ausgeführt ist.

Hierbei wird für die Montage der Signalleuchte im Heckbereich des Fahrzeugs auf die übliche Vorwärtsfahrtrichtung des Fahrzeugs Bezug genommen. Die Signalleuchte ist üblicherweise am in Vorwärtsfahrtrichtung des Fahrzeugs hinteren Bereich des Fahrzeugs so angeordnet, dass sie für nachfolgende Fahrzeuge gut sichtbar ist. Als Hochrichtung wird hier die Richtung der Erdanziehungskraft bezeichnet, wenn das Fahrzeug sich auf einer ebenen Oberfläche befindet. Die Begriffe "oben" und "unten" beziehen sich auf diese Hochrichtung. Die seitliche Richtung bezeichnet hierbei die Richtung, die sich sowohl zur Hochrichtung als auch zur Fahrtrichtung senkrecht erstreckt.

Die erfindungsgemäße Signalleuchte weist eine Hochachsrichtung auf, welche sich entgegen der Vorwärtsfahrtrichtung des Fahrzeugs erstreckt. Wird also die Signalleuchte am Heckbereich des Fahrzeugs montiert und zwar so, dass sich eine Auflagefläche oder Unterseite des Gehäuses der Signalleuchte zum Heckbereich des Fahrzeugs benachbart befindet, dann erstreckt sich die Hochachsrichtung von der Unterseite des Gehäuses in Richtung zur Außenlichtscheibe.

An der Unterseite des Gehäuses besitzt die Signalleuchte Anschlussbuchsen zur Versorgung der Signalleuchte mit elektrischen Anschlussleitungen und Signalleitungen zur Ansteuerung der einzelnen Lichtfunktionen der Signalleuchte.

Die Signalleuchte für Fahrzeuge weist an der Unterseite ein üblicherweise opakes Gehäuse auf und ist in Hochachsrichtung, also an der der Unterseite gegenüberliegenden Seite mit einer Außenlichtscheibe abgeschlossen. Im vorliegenden Fall enthält die Außenlichtscheibe ein auch als Rückstrahler bezeichnetes retroreflektierendes Element. Die Signalleuchte ist mit einer Platine mit Leuchtelementen versehen, wobei die Leuchtelemente Leuchtdioden sind. Das von den Leuchtelementen abgegebene Licht wird nicht nur von der Außenlichtscheibe, sondern auch durch zwischen der Außenlichtscheibe und der Platine angeordnete Verteilscheiben oder Lichtscheiben in seiner Abstrahlcharakteristik beeinflusst.

Die Verteilscheibe dient hierbei als Zwischenscheibe für die dem Schlusslicht zugeordneten Leuchtdioden auf der Platine, die erste Lichtscheibe als Zwischenscheibe für die dem Bremslicht zugeordneten Leuchtdioden auf der Platine, die zweite Lichtscheibe als Zwischenscheibe für die dem Richtungsanzeiger zugeordneten Leuchtdioden auf der Platine, die dritte Lichtscheibe als Zwischenscheibe für die dem auch als Rückfahrscheinwerfer bezeichneten Rückfahrlicht zugeordneten Leuchtdioden auf der Platine und die vierte Lichtscheibe schließlich als Zwischenscheibe für die dem Nebelschlusslicht zugeordneten Leuchtdioden auf der Platine. Der Begriff "Zwischenscheibe" bezeichnet hier die Anordnung der optischen Struktureinrichtung zwischen den Licht abgebenden Leuchtdioden auf der Platine und der Außenlichtscheibe. Die einzelnen Lichtscheiben können dabei zu einer einstückigen oder einteiligen zentralen Zwischenscheibe zusammengefasst sein, sodass diese einstückige zentrale Zwischenscheibe die genannten Lichtscheiben als Segmente der zentralen Zwischenscheibe aufnimmt. Die zentrale Zwischenscheibe wird auch als Zwischenlichtscheibe bezeichnet.

Durch die einstückige Ausführung der optischen Struktureinrichtung wird die Montage vereinfacht, indem anstatt einer Mehrzahl von mechanischen Strukturelementen sowie optischen Elementen wie Verteilscheiben und Lichtscheiben mit Reflektoreigenschaften nur ein einziges optisches Strukturelement, nämlich die zentrale Zwischenscheibe oder Zwischenlichtscheibe an dem vorstehend genannten Gehäuse zu montieren ist. Weiter kann durch diese Ausführung Material und Konstruktionsaufwand in Bezug auf das Gehäuse eingespart werden. Ein Gehäuse, welches eine Vielzahl von separaten Verteilscheiben oder Lichtscheiben aufnehmen muss, muss auch eine Vielzahl von Aufnahmen dafür besitzen. Bei der erfindungsgemä-ßen Signalleuchte muss nur die optische Struktureinrichtung in der Form der genannten zentralen Zwischenscheibe am Gehäuse angeordnet und daran festgelegt werden, sodass die Vielzahl der ansonsten erforderlichen Aufnahmen wegfällt, wodurch die Ausbildung des Gehäuses vereinfacht ist.

Als Aufnahme kann das mechanische Strukturelement dienen, welches die Platine und die optische Struktureinrichtung relativ zum Gehäuse und der Außenlichtscheibe fixiert. Durch diesen Aufbau der Signalleuchte entsteht eine als "Standwitch" bezeichnete Struktur aus Gehäuse, Außenlichtscheibe, Platine und Strukturelement, mit der eine sehr gute Steifigkeit und dennoch auch eine gewisse Zähigkeit und Flexibilität erreicht wird. Diese Zähigkeit bei gleichzeitig vorhandener Flexibilität der Signalleuchte kann dadurch erreicht werden, dass das Gehäuse mit der Außenlichtscheibe thermisch verschweißt wird, also mit der Außenlichtscheibe und dem Gehäuse ein Aufnahmeraum für die Anordnung der Zwischenlichtscheibe und der Platine geschaffen wird. Bei bekannten Signalleuchten wird die Vielzahl der einzelnen Funktionsbauteile, wie beispielsweise das Gehäuse, darin angeordnete einzelne Linsen, Aufnahmen für die Leuchtkörper und Abdeckelemente, welche zur Vermeidung von unerwünschtem Lichtaustritt oder Lichtdurchtritt eingesetzt werden, mittels Schraubverbindungen im Gehäuse und aneinander festgelegt.

Diese bekannte Vorgehensweise führt dazu, dass die bekannte Signalleuchte, welche sich an einem Heckbereich eines Fahrzeugs an Aufnahmen angeordnet befindet, von Fahrbahnunebenheiten und dergleichen induzierten Bewegungen der Aufnahme nicht folgen kann und es so zu Spannungsrissen des Gehäuses und der Außenlichtscheibe kommen kann. Dies wiederum führt zur Ausbildung von Fehlstellen und Undichtigkeitsstellen am Außenbereich der bekannten Signalleuchte, was zum Bruch der Signalleuchte und zum Ausfall der Signalleuchte führen kann, nachdem Feuchtigkeit in den Innenraum der Signalleuchte mit den dort angeordneten elektronischen Bauteilen eingedrungen ist.

Die erfindungsgemäße Signalleuchte löst dieses Problem, weil sie einerseits wesentlich weniger Einzelkomponenten aufweist als die bekannte Signalleuchte und andererseits die Außenkontur der Signalleuchte, nämlich die Außenlichtscheibe und das Gehäuse miteinander verschweißt werden können und zwar unter Zwischenlage der Zwischenlichtscheibe und der Platine mit den Leuchtelementen.

In Ausführungsformen der Signalleuchte ist die optische Struktureinrichtung in einem Mehrkomponenten-Spritzgussverfahren hergestellt. Bei der Ausführung als Mehrkomponenten-Spritzgussteil ist trotz höherer Werkzeugkosten und Konstruktionskosten von besonderem Vorteil, dass sich dadurch der Spritzgussvorgang im Laufe einer längeren Fertigung als wesentlich stabiler erweist.

In Ausführungsformen der Signalleuchte ist zumindest die Verteilscheibe in "glowing body"-Technologie ausgeführt. Dies bedeutet, dass die Verteilscheibe so mit reflektierenden und die Lichtverteilung diffus gestaltenden Partikeln ausgestattet ist, dass das von den auf der Platine angeordneten einzelnen Leuchtdioden abgegebene Licht nicht die für Leuchtdioden typische auf den Betrachter punktförmig wirkende Abstrahlcharakteristik aufweist, sondern dass dieses von den einzelnen Leuchtdioden abgegebene Licht durch die Verteilscheibe nicht nur hindurch tritt, sondern auch in der Verteilscheibe so gestreut wird, dass die gesamte dem Betrachter zugewandte Fläche Licht abstrahlt. Durch diese Technologie lässt sich eine Blendung der Insassen nachfolgender Fahrzeuge infolge der sehr intensiv wahrgenommenen punktförmigen Abstrahlung einzelner Leuchtdioden vermeiden. Dies ist darin begründet, dass die gesamte Fläche der Verteilscheibe eine homogene Lichtabstrahlung aufweist.

Die "glowing body"-Technologie hat den weiteren Vorteil, dass durch die homogene Lichtabgabe der Verteilscheibe Eis, das sich bei niedrigen Temperaturen an der Außenlichtscheibe gebildet hat, schneller abtaut. Das Abtauen von Eis oder Reif ist bei mit Leuchtdioden betriebenen Signalleuchten schwieriger als bei mit Glühbirnen oder Halogenleuchten betriebenen Signalleuchten, da die Widerstandsheizung von Glühbirnen oder Halogenleuchten entfällt. Wenn die Lichtabgabe durch die Leuchtdioden nur punktförmig erfolgt, ist auch die Erwärmung nur in diesen wenigen Punkten gegeben. Wenn dagegen eine flächig Licht abstrahlende Verteilscheibe vorhanden ist, so erfolgt auch die Erwärmung der Außenlichtscheibe über einen größeren Flächenbereich, was bei der erfindungsgemäßen Signalleuchte der Fall ist.

In Ausführungsformen der Signalleuchte weist die optische Struktureinrichtung mehr als eine Verteilscheibe auf. Auf diese Weise können mehrere Licht abgebende Elemente der Signalleuchte in "glowing body" Technologie ausgeführt werden. Bei diesen Licht abgebenden Elementen kann es sich beispielsweise um das Bremslicht, den Rückfahrscheinwerfer und/oder das Nebelschlusslicht handeln.

In Ausführungsformen der Signalleuchte ist eine erste Verteilscheibe und/oder die erste Lichtscheibe in Hochachsrichtung der Signalleuchte weiter vorne gelegen als eine zweite Verteilscheibe und/oder die zweite Lichtscheibe in der Signalleuchte angeordnet. Durch eine solche Gestaltung wird eine ansprechende dreidimensionale Ausformung der dem Betrachter zugewandten Oberfläche der Signalleuchte möglich.

In Ausführungsformen der Signalleuchte ist die zweite Lichtscheibe zwischen zwei Verteilscheiben angeordnet. Die zweite Lichtscheibe dient als Zwischenscheibe für den Richtungsanzeiger, der oft als aus einzelnen Leuchtdioden gebildetes Lauflicht ausgeführt wird. Dies bedeutet, dass der zeitliche Ablauf der Ansteuerung und damit des Aufleuchtens der einzelnen Leuchtdioden so gestaltet wird, dass Insassen eines nachfolgenden Fahrzeugs diesen Ablauf des Aufleuchtens als Anzeige der beabsichtigten Fahrtrichtung wahrnehmen. Zu diesem Zweck sind die dem Richtungsanzeiger zugeordneten Leuchtdioden auf der Platine und die zweite Lichtscheibe in Form eines in seitlicher Richtung verlaufenden Streifens ausgebildet, wobei die Längsausdehnung dieses Streifens in seitlicher Richtung deutlich größer ist als in Hochrichtung. Es ist von Vorteil, wenn zwei in "glowing body"-Technologie ausgeführte Verteilscheiben in Hochrichtung über und unter diesem Streifen angeordnet sind.

In Ausführungsformen der Signalleuchte sind die Lichtscheiben in Fresnel-Technologie in Verbindung mit Polsteroptik ausgeführt. Auf diese Weise lässt sich die Abstrahlcharakteristik der einzelnen Elemente der Signalleuchte in vorteilhafter Weise beeinflussen.

In Ausführungsformen der Signalleuchte sind in Hochachsrichtung unterhalb in "glowing body"-Technologie ausgeführten Bereichen der Verteilscheibe angeordnete Bereiche der Platine in weißer Farbe maskiert. In weiteren Ausführungsformen der Signalleuchte sind weitere Bereiche der Platine in schwarzer Farbe maskiert. Die schwarze Maskierung bewirkt, dass bei ausgeschaltetem Licht das Erscheinungsbild der Signalleuchte dunkel ist. So sind die Bauteile wie Transistoren, Widerstände und Leuchtdioden bei ausgeschalteter Signalleuchte von außen nur schwer erkennbar. In den Bereichen jedoch, die den in "glowing body"-Technologie ausgeführten Bereichen des optischen Strukturelements gegenüberliegen, bewirkt die weiße Maskierung, dass das Licht zwischen dem diffusen Material des "glowing body" und den mit weißer Farbe belegten Bereichen der Platine mehrmals hin und her reflektiert wird. Dadurch erreicht man einen ansprechenden, homogenen und effektiven Lichtaustritt ausgehend von der Verteilscheibe im Strukturelement durch die Außenlichtscheibe hindurch zum nachfolgenden Fahrzeug.

In Ausführungsformen der Signalleuchte sind in Vorwärtsfahrtrichtung hinter der ersten Lichtscheibe angeordnete Bereiche der Außenlichtscheibe weiter vorne gelegen angeordnet als in der Vorwärtsfahrtrichtung hinter der zweiten Lichtscheibe angeordnete Bereiche der Außenlichtscheibe. Diese ansprechende dreidimensionale Ausformung der dem Betrachter zugewandten Oberfläche der Signalleuchte wurde schon im Zusammenhang mit der ersten und zweiten Lichtscheibe beschrieben. Trotz Kanten an der Oberfläche der Außenlichtscheibe reinigt sich die Leuchte bestmöglich von Eis, Schmutz und Staub selbst. Eis, Schmutz und Staub können sich trotz der nicht eben gestalteten Oberfläche der Außenlichtscheibe nur schwer ablagern.

In Ausführungsformen der Signalleuchte ist zwischen der in "glowing body"-Technologie ausgeführten Verteilscheibe und der Außenlichtscheibe eine Maske angeordnet. Durch die Anordnung einer Maske mit unterschiedlich geformten Licht abgebenden Bereichen können verschiedene ansprechende Formen der Licht abgebenden Fläche der Signalleuchte dargestellt werden. Solche Formen können beispielsweise geometrische Formen wie Parallelogramme, Kreise, Dreiecke, alphanumerische Zeichen oder Logos oder Markenzeichen sein.

In Ausführungsformen der Signalleuchte ist die Maske in "glowing body"-Technologie ausgeführt. Durch die Ausführung in "glowing body"-Technologie bewirkt die Maske lediglich eine Änderung der Form der Licht abgebenden Fläche. Die homogene Abstrahlung des Lichts von der Oberfläche der Signalleuchte bleibt unverändert.

In Ausführungsformen ist das mechanische Strukturelement der Signalleuchte aus einem lichtabsorbierenden Material gefertigt. Dadurch wird vorteilhaft erreicht, dass die einzelnen Lichtsegmente sauber und mit scharfen Kanten abgetrennt sind.

Durch den Mehrkomponentenspritzguss und die Verwendung einer lichtabsorbierenden, also beispielsweise schwarzen Komponente ist es möglich, ein sogenanntes "Light Bleeding", also Lichtaustritt durch einen Luftspalt zwischen dem optischen Element, beispielsweise einer Verteilscheibe oder einer Lichtscheibe und einem das optische Element tragenden Rahmen zu verhindern, da es beim Mehrkomponentenspritzguss keinen Luftspalt zwischen optischem Element und Rahmen mehr gibt.

In Ausführungsformen weist die Signalleuchte eine Begrenzungsleuchte auf, wobei ein mit Freistellungen versehenes Verbindungselement sowohl an der Signalleuchte als auch an der Begrenzungsleuchte lösbar angebracht ist. Die Freistellungen ergeben hier eine Sollbruchstelle in dem auch als Halteelement bezeichneten Verbindungselement. Bei einer möglichen Kollision beispielsweise mit einem Stra-ßenbegrenzungspfosten oder Leitpfosten bricht das Halteelement an der Sollbruchstelle. Die Begrenzungsleuchte bleibt jedoch wegen der Steckverbindung und des Anschlusskabels mit dem Fahrzeug verbunden. Mit dieser Sollbruchstelle am Halter der Begrenzungsleuchte ist es nun möglich, im Falle einer Kollision nur das Halteelement und nicht die ganze Begrenzungsleuchte zu tauschen.

Die erfindungsgemäße Signalleuchte zeichnet sich unter anderem durch die vorstehend erwähnte Zwischenlichtscheibe aus. Die Zwischenlichtscheibe ist aufgrund ihrer Fertigung mittels eines Mehrkomponentenspritzgussverfahrens zwar relativ aufwendig herzustellen, weist aber verglichen mit einer Aufnahmestruktur mit mehreren optischen Linsen wesentliche Vorteile auf. Da es sich bei der Zwischenlichtscheibe mit den daran einstückig angeordneten Verteilscheiben oder Lichtscheiben um ein einzelnes Bauteil handelt, welches die Aufgaben der optischen Lichtverteilung der Signalleuchte übernimmt, wird einerseits die Fertigung der Signalleuchte günstiger und andererseits die Montage der Signalleuchte einfacher.

Bei der Montage der Signalleuchte entfällt nämlich der Schritt der ansonsten notwendigen Anordnung der einzelnen Optiken an einem Trägerelement oder Aufnahme der Signalleuchte mittels beispielsweise Schraubenverbindungen. Darüber hinaus kann die Zwischenlichtscheibe mit dem daran angeordneten mechanischen Strukturelement, welches als Aufnahme und Ausrichtelement für die Platine dient zusammen mit der Platine in den Innenraum eines Gehäuses, welches die Unterseite der erfindungsgemäßen Signalleuchte bildet, eingesetzt werden und zwar mittels nur eines Montagevorgangs. Die Außenlichtscheibe überspannt die Zwischenlichtscheibe und der gesamte Aufbau aus Außenlichtscheibe, Zwischenlichtscheibe und Gehäuse kann dann miteinander verschweißt werden, um eine hermetisch dichte Abdichtung gegen Umwelteinflüsse und Wasser beim Betrieb der erfindungsgemäßen Signalleuchte an einem Fahrzeug zu erreichen.

Das Fehlen der genannten einzelnen Schraubelemente führt dazu, dass die am Heckbereich eines Fahrzeugs angeordnete Signalleuchte - dort unterliegt die Signalleuchte unvermeidlich thermischen Spannungen und auch Erschütterungen im Fahrbetrieb des Fahrzeugs - daraus resultierenden Verwindungen folgen kann und die Gefahr eines Spannungsbruchs reduziert ist.

Durch den Mehrkomponentenspritzguss und den vorstehend beschriebenen dunkel oder schwarz eingefärbten Bereichen wird der unerwünschte Lichtaustritt im Luftspalt zwischen Optik und Aufnahmerahmen für die Optik vermieden.

Die Anordnung der einzelnen Designelemente in bezogen auf die Hochachsrichtung der Signalleuchte unterschiedlichen Ebenen führt zu einem flächigen Gesamteindruck der Signalleuchte und auch zu einer Tiefenwirkung des emittierten Lichts, was unter anderem auch durch die Verwendung von Dickwandoptiken mit Fresnel-Technologie und der bereits erwähnten Polsteroptiken herbeigeführt wird.

Die Zwischenlichtscheibe dient auch als Träger und Fixierungselement für die Platine und sorgt so für eine Erhöhung der Stabilität der Leuchte bei gleichzeitig erhaltener Flexibilität, wie dies vorstehend erläutert wurde. Einzelne verschraubte Elemente würden nämlich das Gewicht der Signalleuchte erhöhen und zu zusätzlichen Montageschritten bei der Montage führen und darüber hinaus auch die Bruchgefahr der Signalleuchte erhöhen, wie dies vorstehend bereits erläutert wurde.

Es wurde vorstehend bereits erwähnt, dass die Schlusslichtfunktion oder Rücklichtfunktion bei der erfindungsgemäßen Signalleuchte durch die Ausbildung der klar abgegrenzten lichterzeugenden Segmente von großer Bedeutung ist, was auch zu einer sehr guten Sichtbarkeit im Straßenverkehr führt.

Die Anordnung dieser Segmente führt auch dazu, dass die Signalleuchte im Betrieb eine homogene Erwärmung erfährt, was auch dazu führt, dass die Außenlichtscheibe homogen erwärmt wird und somit die Außenlichtscheibe gleichmäßig beheizt wird, was der Bildung von Eis und Reif auf der Außenlichtscheibe entgegenwirkt. Die Anordnung der Lichtsegmente für das Bremslicht benachbart zu den Lichtsegmenten für das Rücklicht führt auch dazu, dass der Bremslichtbereich an der Außenlichtscheibe homogen erwärmt wird und somit auch im Bremslichtbereich der Bildung von Eis und Reif entgegengewirkt wird.

Die in Hochachsrichtung der erfindungsgemäßen Signalleuchte unterhalb der Zwischenlichtscheibe angeordnete Platine besitzt weiß und schwarz maskierte Segmente. Die schwarze Maskierung besitzt den Vorteil, dass die nicht beleuchteten Bereiche hinsichtlich ihres Erscheinungsbilds dunkel bleiben und darauf angeordnete elektronische Bauteile, wie beispielsweise Transistoren und Widerstände nicht optisch in Erscheinung treten. Die erwähnten glowing bodies mit der benachbart angeordneten weißen Maskierung besitzen den Vorteil, dass das emittierte Licht zwischen dem diffusen Material der glowing bodies mehrfach reflektiert wird und damit ein homogener und effektiver Lichtaustritt erreicht werden kann.

Wie es darüber hinaus erwähnt wurde, kann die erfindungsgemäße Signalleuchte eine Begrenzungsleuchte aufweisen, welche mittels eines Auslegerarms mit elastomerem Material an die Signalleuchte beziehungsweise das Gehäuse der Signalleuchte angebunden werden kann.

Der Auslegerarm kann eine Sollbruchstelle aufweisen, was dazu führt, dass der Auslegerarm an der Sollbruchstelle bei einem unbeabsichtigten Kontakt der Begrenzungsleuchte mit beispielsweise einem Straßenleitpfosten oder Straßenbegrenzungspfosten bricht und somit die Gefahr beseitigt wird, dass die Begrenzungsleuchte mit ihrem Leuchtenkopf auf die Außenlichtscheibe der Signalleuchte aufschlägt und diese beschädigt.

Wird in einem solchen Kollisionsfall die Begrenzungsleuchte beschädigt, kann sie einfach gegen eine neue Begrenzungsleuchte ausgetauscht werden, welche mittels einer einfachen Schraubverbindung mit dem Gehäuse der erfindungsgemäßen Signalleuchte lösbar verbunden werden kann. In Ausführungsformen der Begrenzungsleuchte kann auch der Auslegerarm austauschbar ausgebildet sein. Zur elektrischen Verbindung der Begrenzungsleuchte mit der erfindungsgemäßen Signalleuchte weist diese eine am Gehäuse vorgesehene elektrische Anschlussbuchse auf, welche mit einer elektrischen Verbindungsleitung der Begrenzungsleuchte elektrisch leitend verbunden werden kann.

Schließlich besitzt die Außenlichtscheibe der erfindungsgemäßen Signalleuchte ein flaches Design, wodurch die Höhe der erfindungsgemäßen Signalleuchte in Hochachsrichtung verringert werden kann. Aufgrund der Ausbildung der Zwischenlichtscheibe, wie sie vorher erwähnt wurde, wird trotzdem ein dreidimensionaler Effekt des Erscheinungsbilds der Lichtemission der erfindungsgemäßen Signalleuchte erzielt. Schließlich ermöglicht die erfindungsgemäße Signalleuchte auch die Integration der Funktion eines Logos, die es ermöglicht, ein Logo oder eine Marke oder eine Kontur oder ein Bild in das Erscheinungsbild der Signalleuchte einzubinden, wie es vorstehend ausführlich erläutert wurde.

Die Erfindung wird im folgenden Text anhand der Zeichnung näher erläutert. Diese zeigt in:
Fig. 1 eine perspektivische Darstellung einer Ausführungsform einer erfindungsgemäßen Signalleuchte;
Fig. 2 eine perspektivische Darstellung einer Außenlichtscheibe der erfindungsgemäßen Signalleuchte nach Fig. 1;
Fig. 3 eine Darstellung eines optischen Strukturelements der erfindungsgemäßen Signalleuchte in der Perspektive der Fig. 2;
Fig. 4 eine Darstellung einer Platine der erfindungsgemäßen Signalleuchte in der Perspektive der Fig. 2;
Fig. 5 eine Darstellung einer Begrenzungsleuchte zur Anbringung an der erfindungsgemäßen Signalleuchte;
Fig. 6 eine perspektivische Ansicht von unten einer Begrenzungsleuchte zur Anbringung an der erfindungsgemäßen Signalleuchte; und
Fig. 7 eine der Fig. 3 ähnliche Darstellung eines mit einer Maske versehenen optischen Strukturelements einer erfindungsgemäßen Signalleuchte.

In der folgenden Figurenbeschreibung bezeichnen gleiche Bezugszeichen auch gleiche Elemente.

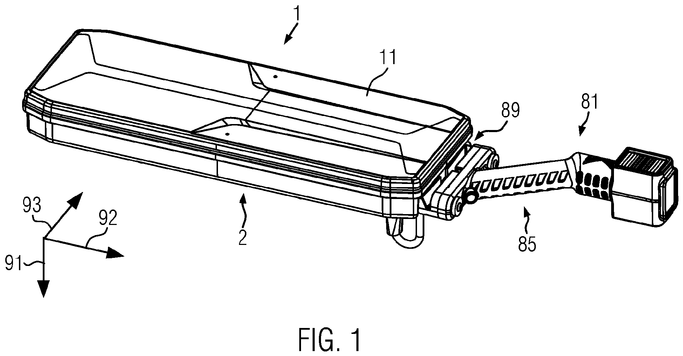

Fig. 1 der Zeichnung zeigt eine schematische perspektivische Ansicht einer Signalleuchte 1, welche zur Anbringung an einer rechten Seite eines Hecks eines nicht näher dargestellten Fahrzeugs vorgesehen ist, bei dem es sich um einen Sattelauflieger eines Lastkraftwagens handeln kann. Im unteren Teil der Fig. 1 ist das Gehäuse 2 erkennbar und darüber die Abdeckscheibe oder Außenlichtscheibe 11. Weiter ist eine Begrenzungsleuchte 81 mittels eines Halteelements oder Auslegers oder Auslegerarms 85 an der Signalleuchte 1 angebracht. Mit den Pfeilen 91 für die Vorwärtsfahrtrichtung des mit der Signalleuchte 1 versehenen Fahrzeugs, 92 für die seitliche Richtung und 93 für die Hochachsrichtung wird ein Koordinatensystem definiert.

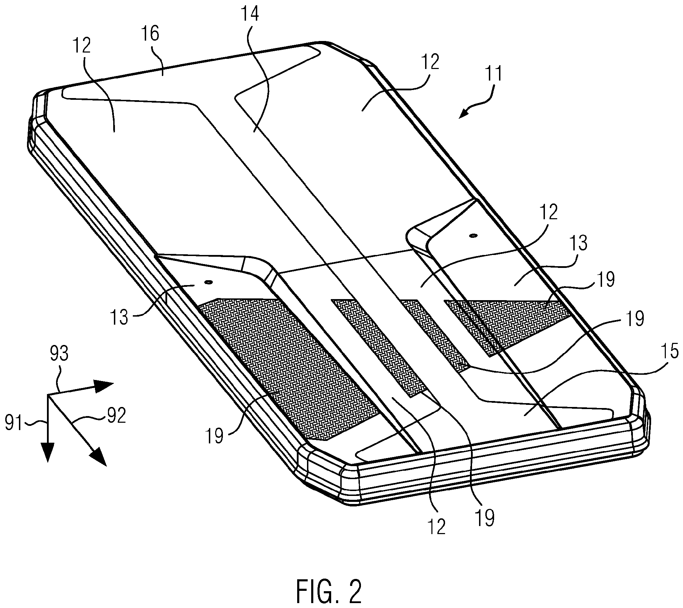

Die Außenlichtscheibe 11 ist in einer anderen Perspektive in Fig. 2 dargestellt, die eine bessere Erkennung der einzelnen Merkmale der Außenlichtscheibe 11 ermöglicht. Mit dem Bezugszeichen 12 sind dem Rücklicht oder Schlusslicht zugeordnete Bereiche der Außenlichtscheibe 11 gekennzeichnet. Mit dem Bezugszeichen 13 sind dem Bremslicht zugeordnete Bereiche der Außenlichtscheibe 11 gekennzeichnet. Mit dem Bezugszeichen 14 sind dem Richtungsanzeiger zugeordnete Bereiche der Außenlichtscheibe 11 gekennzeichnet. Mit dem Bezugszeichen 15 sind dem Rückfahrscheinwerfer zugeordnete Bereiche der Außenlichtscheibe 11 gekennzeichnet. Mit dem Bezugszeichen 16 sind der Nebelschlussleuchte zugeordnete Bereiche der Außenlichtscheibe 11 gekennzeichnet. Das Bezugszeichen 19 schließlich bezeichnet Bereiche der Außenlichtscheibe 11, die als retroreflektierendes Element ausgeführt sind. Dieses retroreflektierende Element wird auch als Rückstrahler bezeichnet.

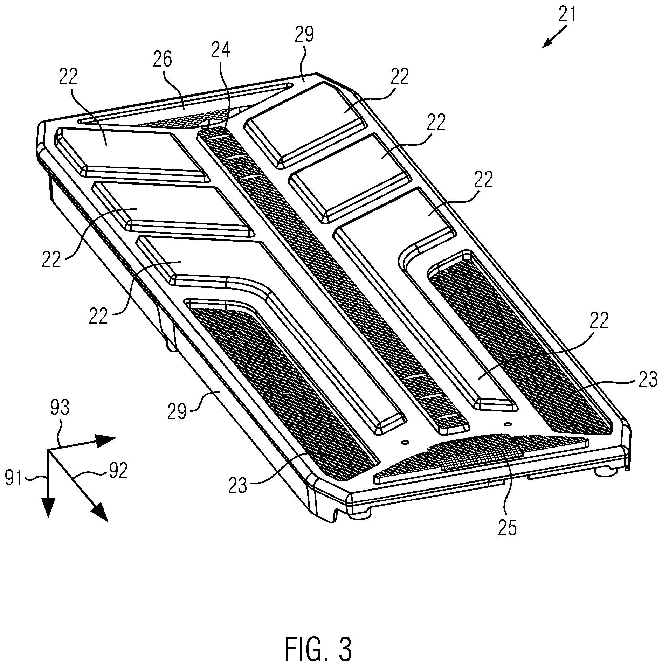

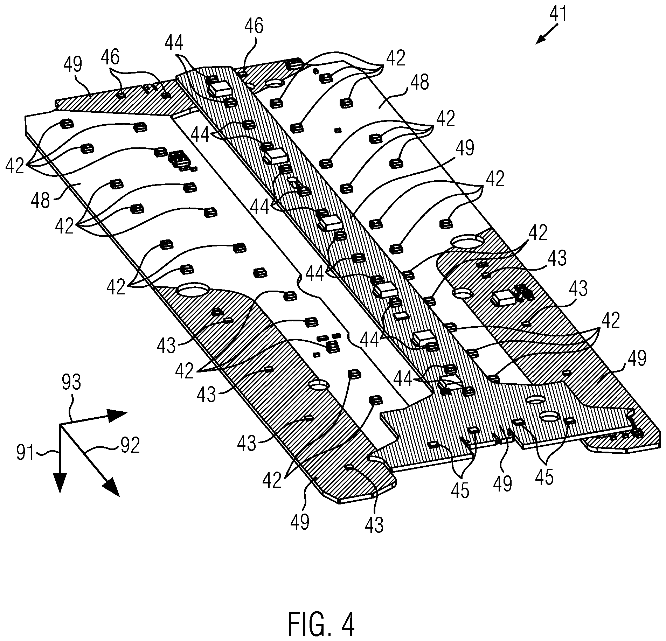

Fig. 3 ist eine schematische Darstellung einer optischen Struktureinrichtung 21 in der Perspektive nach der Fig. 2. Das ganz allgemein als Struktureinrichtung 21 bezeichnete Element stellt eine Zwischenlichtscheibe dar, welche zwischen einer Platine 41, welche in Fig. 4 der Zeichnung dargestellt ist, und der Außenlichtscheibe 11 angeordnet ist. Mehrere, dem Schlusslicht zugeordnete optische Funktionssegmente oder Verteilscheiben 22 sind unschwer erkennbar. Beispielhaft sind zwei optische Funktionssegmente oder Lichtscheiben 23 dargestellt, die dem Bremslicht zugeordnet sind. Ein sich streifenförmig in seitlicher Richtung 92 erstreckendes Funktionssegment oder Lichtscheibe 24 ist dem Richtungsanzeiger zugeordnet. Das optische Funktionssegment beziehungsweise die Lichtscheibe 25 ist dem Rückfahrscheinwerfer zugeordnet. Schließlich ist das optische Funktionssegment beziehungsweise die Lichtscheibe 26 dem Nebelschlusslicht zugeordnet. Die verwendeten optischen Funktionssegmente können sogenannte Dickwandoptiken mit Fresnel-Technologie in Kombination mit Polsteroptiken sein.

In seitlicher Richtung und in Hochrichtung dient das mechanische Strukturelement 29 als Halterung und als Träger für die Verteilscheiben 22 und die Lichtscheiben 23 bis 26. Das mechanische Strukturelement 29 dient darüber hinaus der Fixierung der nachfolgend in Fig. 4 näher beschriebenen Platine 41 und der Struktureinrichtung oder Zwischenlichtscheibe 21 im Gehäuse 2.

Diese Zwischenlichtscheibe oder optische Struktureinrichtung 21 ist einstückig ausgeführt und in einem Mehrkomponenten-Spritzgussverfahren gefertigt. Zur Bildung der Zwischenlichtscheibe können drei Komponenten verwendet werden. Das mechanische Strukturelement 29 ist mit einem schwarzen Kunststoff gefertigt. Dieser schwarze Kunststoff ist opak und Licht absorbierend. Dadurch wird ein Lichtaustritt zwischen einzelnen Bereichen der Signalleuchte 1 vermieden. Die einzelnen Bereiche der Signalleuchte 1 sind somit klar gegeneinander abgegrenzt. Die einzelnen Licht abstrahlenden Funktionen der Signalleuchte 1 sind Rücklicht, Bremslicht, Richtungsanzeiger, Rückfahrscheinwerfer und schließlich Nebelschlusslicht.

Die zweite Komponente ist der Kunststoff, mit dem die Funktionselemente oder Verteilscheiben 22 gefertigt sind. Dieser Kunststoff enthält das Licht diffus streuende Partikel. Durch diese diffus streuenden Partikel wird eine homogene Abstrahlung von der gesamten Fläche der Verteilscheibe 22 und somit die Wirkung der "glowing body"-Technologie erreicht.

Als dritte Komponente kann ein dritter Kunststoff für die Funktionselemente oder Lichtscheiben 23 bis 26 dienen. Diese Lichtscheiben werden mittels der Spritzgussform in Fresnel-Technologie in Verbindung mit Polsteroptik ausgeführt. Dadurch wird ein ansprechendes Erscheinungsbild der ansonsten punktförmig abstrahlenden einzelnen Leuchtdioden erreicht.

Fig. 4 ist eine schematische Darstellung einer Platine 41 in derselben Perspektive wie Fig. 2 und 3. Deutlich zu erkennen sind hierbei die dem Schlusslicht oder Rücklicht zugeordneten Leuchtdioden 42, die dem Bremslicht zugeordneten Leuchtdioden 43, die dem Richtungsanzeiger zugeordneten Leuchtdioden 44, die dem Rückfahrscheinwerfer zugeordneten Leuchtdioden 45 und die dem Nebelschlusslicht zugeordneten Leuchtdioden 46. Darüber hinaus erkennt man ohne weiteres, dass die dem Schlusslicht zugeordneten Bereiche 48 in einer anderen Farbe ausgeführt sind als die den übrigen Elementen zugeordneten Bereiche.

Die Bereiche 48 der Platine 41 sind mit weißer Farbe bedruckt oder lackiert oder mittels eines anderen Verfahrens belegt. Durch diese weiße Farbe werden mehrfache Reflektionen des von den Leuchtdioden 42 abgegebenen Lichts zwischen den diffus streuenden Partikeln in der in Fig. 3 dargestellten Verteilscheibe 22 und den mit weißer Farbe belegten Bereichen 48 erreicht. Dadurch wird die Lichtausbeute des Schlusslichts erhöht.

Durch den Aufbau mittels der im optischen Strukturelement 21 angeordneten Platine 41 können diese beiden Bauelemente sicher zwischen Gehäuse 2 und Außenlichtscheibe 11 positioniert, gehalten und gelagert werden. Wenn das Gehäuse 2 und die Außenlichtscheibe 11 nach Einbringung des optischen Strukturelements 21 mit der Platine 41 miteinander verschweißt werden, wird es möglich, auf zusätzliches Gewicht und zusätzlichen Montageaufwand verursachende Fixierelemente wie beispielsweise Schrauben zur Montage der einzelnen Bauteile relativ zueinander zu verzichten. Die erfindungsgemäße Leuchte ist zur Anordnung am Heckbereich von Fahrzeugen vorgesehen, wie dies vorstehend ausgeführt wurde. Die Leuchte ist im Betrieb des Fahrzeugs Erschütterungen und über die sich beim Betrieb des Fahrzeugs verwindenden Montagestellen auch Verwindungen ausgesetzt.

Schrauben zur Festlegung der genannten Bauteile einer bekannten Leuchte aneinander sorgen dafür, dass die Leuchte insgesamt sehr steif ist und daher den genannten Verwindungen nicht folgen kann und somit die Gefahr von Brüchen des Gehäuses und der darin aufgenommenen Bauteile oder Segmente besteht.

Dadurch, dass die genannten Bauteile der erfindungsgemäßen Signalleuchte miteinander verschweißt werden, ist die Leuchte dazu in der Lage, den Verwindungen am Fahrzeug zu folgen und dadurch wird die Bruchgefahr und ganz allgemein die Gefahr einer Beschädigung der erfindungsgemäßen Leuchte verringert.

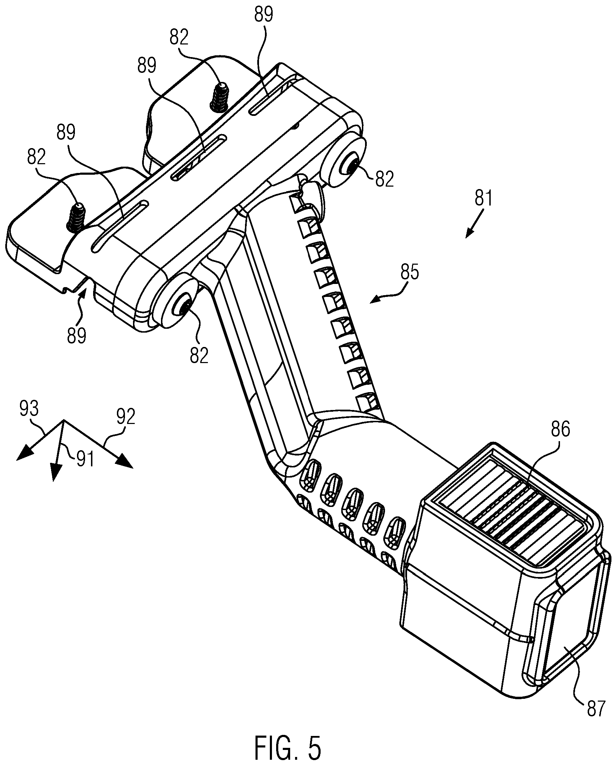

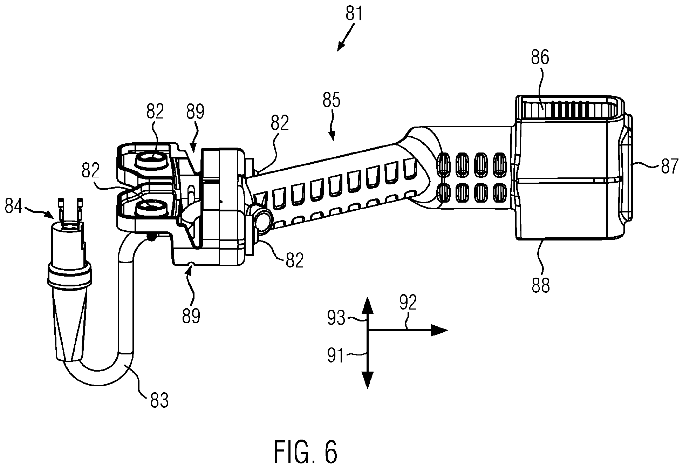

Fig. 5 und Fig. 6 zeigen eine Begrenzungsleuchte 81, wie sie am Gehäuse 2 einer Signalleuchte 1 angebracht werden kann. Die Perspektive in Fig. 5 ist dieselbe wie in den Fig. 2 bis 4. In Fig. 6 hingegen wurde eine ungefähr der Hochrichtung entsprechende Perspektive gewählt, die Ansicht erfolgt also von unten. In beiden Fig. 5 und 6 sind die nach hinten gerichtete Außenlichtscheibe 86 und die in seitlicher Richtung abstrahlende Außenlichtscheibe 87 gut erkennbar. In Fig. 6 ist weiter die nach vorne abstrahlende Außenlichtscheibe 88 bezeichnet. Dort sind weiter das elektrische Anschlusskabel 83 und der Steckverbinder 84 sichtbar.

Mit Verbindungselementen 82, die hier als Schrauben ausgeführt sind, wird das Halteelement 85 mit dem Tragarm der Begrenzungsleuchte 81 und dem Gehäuse 2 der Signalleuchte 1 verbunden. Die Freistellungen 89 unterteilen das Halteelement 85 im Wesentlichen entlang der Hochrichtung. Dabei ist das Material zwischen den Freistellungen 89 mit geringerer Stärke ausgeführt, sodass mittels der Freistellungen 89 eine Sollbruchstelle im Halteelement 85 gebildet wird.

Das mit der Sollbruchstelle versehene Halteelement 85 besitzt den Vorteil, dass im Falle einer Kollision der Begrenzungsleuchte 81 mit einem Hindernis, wie beispielsweise einem Straßenleitpfosten der Haltearm oder das Halteelement 85 an der Sollbruchstelle mit den Freistellungen 89 bricht und somit die Gefahr beseitigt wird, dass der mit den Lichtscheiben 86 und 87 versehene Ausleger, der aus einem elastischen Material gefertigt ist, nach der Kollision mit dem Straßenleitpfosten in Richtung zur Außenlichtscheibe 11 der erfindungsgemäßen Leuchte zurück schlägt und somit die Außenlichtscheibe 11 bleibend beschädigt.

Eine solche Beschädigung würde nämlich dazu führen, dass die gesamte Leuchte 1 ersetzt werden muss. Da das Halteelement oder der Haltearm 85 an der Sollbruchstelle brechen kann, wird ein Zurückschlagen des Haltearm auf die Außenlichtscheibe vermieden, wodurch die Gefahr einer bleibenden Beschädigung der Leuchte insgesamt vermieden wird.

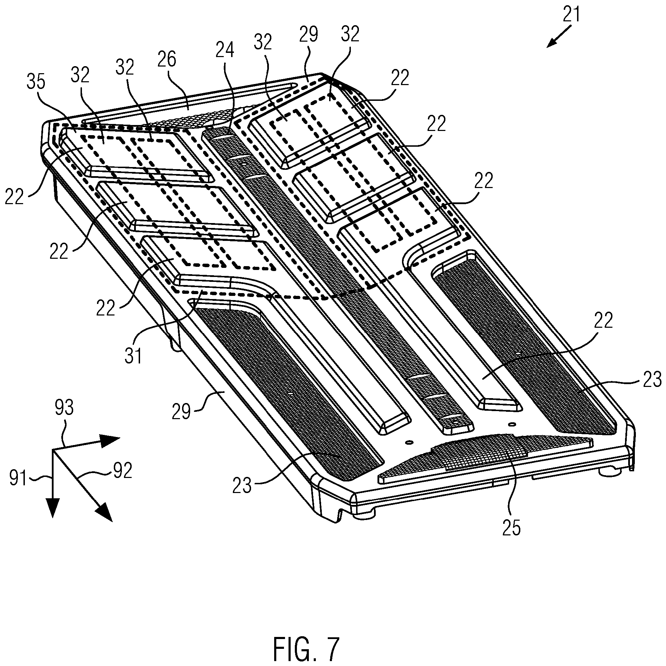

In Fig. 7 ist dieselbe optische Struktureinrichtung 21 wie in Fig. 3 dargestellt, die mit einer Maske 31 versehen ist. Diese Maske 31 weist opake Bereiche 35 auf und mindestens eine weitere Verteilscheibe 32. Diese Maske 31 ist in Fig. 7 zur besseren Unterscheidung von dem optischen Strukturelement 21 mit gestrichelten Linien dargestellt. Wenn die Maske 31 in Vorwärtsfahrtrichtung hinter dem Schlusslicht zugeordneten Verteilscheiben 22 angeordnet ist, lässt sich mittels dieser Verteilscheiben 32 eine homogene Abstrahlung des von den der Schlussleuchte zugeordneten Leuchtdioden 42 abgegebenen Lichts erreichen, obwohl die geometrische Form der dem Betrachter zugewandten Fläche der Verteilscheiben 32 von der geometrischen Form der dem Betrachter zugewandten Fläche der Verteilscheiben 22 abweicht.

Damit wird es möglich, unterschiedliche Designs beispielsweise durch Anbringen von Marken oder Logos der jeweiligen Benutzer der Signalleuchte in den Verteilscheiben 32 zu verwirklichen. Bei der Endmontage der Leuchte können somit spezifische, die Marken oder Logos wiedergebende Masken 31 eigesetzt werden, womit eine einfache und kostengünstige Möglichkeit der Integration von Marken oder Logos in das Erscheinungsbild der Signalleuchte geschaffen ist.

Beispielhaft sind in dieser Figurenbeschreibung vier der fünf in der Signalleuchte vorhandenen Leuchtensegmente in Fresnel-Technologie und Polsteroptik ausgeführt. Nur eines der fünf in der Signalleuchte vorhandenen Segmente, nämlich das Schlusslichtsegment ist in "glowing body"-Technologie ausgeführt. Es können auch mehr oder weniger Leuchten in "glowing body"-Technologie ausgeführt sein, und es können auch mehr oder weniger Leuchtensegmente mit Fresnel-Technologie und Polsteroptik ausgeführt sein. Darüber hinaus ist auch die Gesamtzahl der in der Signalleuchte vorhandenen Leuchtensegmente nicht auf fünf beschränkt, es können auch mehr oder weniger Leuchtensegmente realisiert werden.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1. Rückleuchte
2. Gehäuse
11. Außenlichtscheibe
12. Schlusslicht
13. Bremslicht
14. Richtungsanzeiger
15. Rückfahrlicht
16. Nebelschlusslicht
19. Rückstrahler
21. Optische Struktureinrichtung
22. Verteilscheibe Schlusslicht
23. erste Lichtscheibe Bremslicht
24. zweite Lichtscheibe Richtungsanzeiger
25. dritte Lichtscheibe Rückfahrlicht
26. vierte Lichtscheibe Nebelschlusslicht
29. Mechanisches Strukturelement
31. Maske
32. Verteilscheibe Schlusslicht
35. opaker Bereich
41. PCB / Platine
42. LED Schlusslicht
43. LED Bremslicht
44. LED Richtungsanzeiger
45. LED Rückfahrlicht
46. LED Nebelschlusslicht
48. weiß bedruckte Fläche der Platine
49. schwarz bedruckte Fläche der Platine
81. Begrenzungsleuchte
82. Verbindungselement
83. Anschlusskabel
84. Steckverbinder
85. Halteelement
86. hintere Außenlichtscheibe
87. seitliche Außenlichtscheibe
88. vordere Außenlichtscheibe
89. Freistellung
91. Fahrtrichtung
92. seitliche Richtung
93. Hochrichtung

## Patentansprüche

1. Signalleuchte (1) für Fahrzeuge, mit einem Gehäuse (2) mit einer Hochachsrichtung (91), einer Außenlichtscheibe (11), einer Platine (41) mit Leuchtelementen (42, 43, 44, 45, 46) und mit einer optischen Struktureinrichtung (21), wobei die optische Struktureinrichtung (21) mindestens eine Verteilscheibe (22) und ein mechanisches Strukturelement (29) aufweist, **dadurch gekennzeichnet, dass** das mechanische Strukturelement (29) mit der mindestens einen Verteilscheibe (22) einstückig ausgeführt ist.

2. Signalleuchte (1) nach Anspruch 1, **dadurch gekennzeichnet, dass** das Strukturelement (29) dazu eingerichtet ist, die Platine (41) aufzunehmen und die Platine (41) und die optische Struktureinrichtung (21) relativ zum Gehäuse (2) und der Au-ßenlichtscheibe (11) zu fixieren.

3. Signalleuchte (1) nach Anspruch 1 oder 2, **dadurch gekennzeichnet, dass** die optische Struktureinrichtung (21) in einem Mehrkomponenten-Spritzgussverfahren hergestellt ist.

4. Signalleuchte (1) nach einem der vorhergehenden Ansprüche, **dadurch gekennzeichnet, dass** die mindestens eine Verteilscheibe (22) in "glowing body"-Technologie ausgeführt ist.

5. Signalleuchte (1) nach einem der vorhergehenden Ansprüche, **gekennzeichnet durch** mindestens eine Lichtscheibe (23, 24, 25, 26).

6. Signalleuchte (1) nach einem der vorhergehenden Ansprüche, **dadurch gekennzeichnet, dass** die optische Struktureinrichtung (21) mehr als eine Verteilscheibe (22) aufweist.

7. Signalleuchte (1) nach einem der vorhergehenden Ansprüche, **dadurch gekennzeichnet, dass** eine erste Verteilscheibe (22) und/oder eine erste Lichtscheibe (23) in der Hochachsrichtung (91) des Gehäuses (2) im Abstand zu einer zweiten Verteilscheibe (22) und/oder eine zweite Lichtscheibe (24) angeordnet ist.

8. Signalleuchte (1) nach Anspruch 6, **dadurch gekennzeichnet, dass** die zweite Lichtscheibe (24) zwischen zwei Verteilscheiben (22) angeordnet ist.

9. Signalleuchte (1) nach einem der vorhergehenden Ansprüche, **dadurch gekennzeichnet, dass** die Lichtscheiben (23, 24, 25, 26) in Fresnel-Technologie in Verbindung mit Polsteroptik ausgeführt sind.

10. Signalleuchte (1) nach Anspruch 4, **dadurch gekennzeichnet, dass** in Hochachsrichtung (91) vor in "glowing body"-Technologie ausgeführten Bereichen der Verteilscheibe (22) angeordnete Bereiche (48) der Platine (41) in weißer Farbe maskiert sind.

11. Signalleuchte (1) nach Anspruch 10, **dadurch gekennzeichnet, dass** weitere Bereiche (49) der Platine (41) in schwarzer Farbe maskiert sind.

12. Signalleuchte (1) nach Anspruch 7, **dadurch gekennzeichnet, dass** in der Hochachsrichtung (91) hinter der mindestens eine Verteilscheibe (22) und/oder der ersten Lichtscheibe (23) angeordnete Bereiche der Außenlichtscheibe (11) weiter vorne gelegen angeordnet sind als in der Fahrtrichtung (91) hinter der mindestens eine Verteilscheibe (22) und/oder der zweiten Lichtscheibe (24) angeordnete Bereiche der Außenlichtscheibe (11).

13. Signalleuchte (1) nach Anspruch 4, **dadurch gekennzeichnet, dass** zwischen der mindestens einen in "glowing body"-Technologie ausgeführten Verteilscheibe (22) und der Außenlichtscheibe (11) eine Maske (31) angeordnet ist.

14. Signalleuchte (1) nach Anspruch 13, **dadurch gekennzeichnet, dass** die Maske (31) in "glowing body"-Technologie ausgeführt ist.

15. Signalleuchte (1) nach einem der vorhergehenden Ansprüche, **dadurch gekennzeichnet, dass** das mechanische Strukturelement (29) mit einem lichtabsorbierenden Material gefertigt ist.

16. Signalleuchte (1) nach einem der vorhergehenden Ansprüche mit einer Begrenzungsleuchte (81), **dadurch gekennzeichnet, dass** ein mit Freistellungen (89) versehenes Verbindungselement (88) sowohl an der Signalleuchte (1) als auch an der Begrenzungsleuchte (81) lösbar angebracht ist.
